# FASCICULE DE BREVET EUROPEEN

(11) **EP 3 839 733 B1**
(45) Date de publication et mention de la délivrance du brevet: **01.01.2025**
(21) Numéro de dépôt: 20215327.6
(22) Date de dépôt: 18.12.2020
(51) Int. Cl.: G06F 9/48

(54) **PROCESSEUR GRAPHIQUE, PLATEFORME COMPRENANT UN TEL PROCESSEUR GRAPHIQUE ET UN PROCESSEUR CENTRAL MULTICOULEURS, ET PROCÉDÉ DE GESTION DE RESSOURCE(S) D'UN TEL PROCESSEUR GRAPHIQUE**
GRAFIKPROZESSOR, PLATTFORM MIT EINEM SOLCHEN GRAFIKPROZESSOR UND EINEM MEHRKERNIGEN ZENTRALPROZESSOR, UND VERFAHREN ZUR VERWALTUNG DER RESSOURCE(N) EINES SOLCHEN GRAFIKPROZESSORS
GRAPHIC PROCESSOR, PLATFORM COMPRISING SUCH A GRAPHIC PROCESSOR AND A MULTI-CORE CENTRAL PROCESSOR, AND METHOD FOR MANAGING RESOURCE(S) OF SUCH A GRAPHIC PROCESSOR

(30) Priorité: 19.12.2019 FR 1914873
(43) Date de publication de la demande: 23.06.2021
(73) Titulaire: THALES, 92400 Courbevoie (FR)
(72) Inventeur: FINE, ALEXANDRE, 33700 MERIGNAC (FR)
(74) Mandataire: Lavoix

(56) Documents cités:
- WO-A1-2016/034447
- WO-A1-2016/195877
- FR-A1- 3 045 866
- US-A1- 2012 320 070

## Description

La présente invention concerne un processeur graphique destiné à être relié à un processeur central multicoeurs ayant N coeurs distincts, N étant un nombre entier supérieur ou égal à 2.

L'invention concerne également une plateforme comprenant un tel processeur graphique et un processeur central multicoeurs ayant N coeurs distincts, relié au processeur graphique.

L'invention concerne également un procédé de gestion de ressource(s) d'un processeur graphique, le procédé étant mis en oeuvre par un tel processeur graphique.

L'invention concerne le domaine des systèmes d'affichage de données, de préférence destinés à être embarqués à bord d'un aéronef, notamment dans un cockpit d'aéronef.

L'invention concerne en particulier le domaine des processeurs graphiques inclus dans ces systèmes d'affichage, ces processeurs graphiques étant également généralement appelés GPU (de l'anglais *Graphie Processing Unit*)*.* De tels processeurs graphiques sont typiquement réalisés sous forme d'un ou plusieurs circuits intégrés dédiés, tels qu'un ou plusieurs ASIC (de l'anglais *Application Spécifie Integrated Circuit*).

Chaque processeur graphique est généralement relié à un processeur central, en particulier un processeur multicoeurs, pour former une plateforme, le processeur central étant également généralement appelé CPU (de l'anglais *Central Processing Unit*)

WO 2016/195877 A1 concerne une plateforme CPU-GPU visant à améliorer la gestion de puissance d'une ou de plusieurs ressource(s) de processeur graphique, la plateforme comprenant un processeur central multicoeur, un processeur graphique et une mémoire de stockage de contextes de processeur graphique (de l'anglais *GP Contexts*), chacun associé à une application et comprenant une configuration matérielle et des paramètres de commande liés à la puissance ; la mémoire étant externe aux processeurs central et graphique.

On connait alors une plateforme du type précité présentant une architecture dite de multitraitement symétrique, également appelée architecture SMP (de l'anglais *Symetrical Multi-Processing*). Une telle plateforme héberge généralement un unique système d'exploitation pour tous les coeurs du processeur multicoeurs, et le système d'exploitation gère alors l'accès de chacun des coeurs aux différents autres éléments de la plateforme, notamment au processeur graphique.

Toutefois, une plateforme avec une telle architecture de multitraitement symétrique n'est pas toujours adaptée.

Le but de l'invention est alors de proposer un processeur graphique, et un procédé associé de gestion de ressource(s), permettant un fonctionnement de la plateforme comprenant le processeur graphique selon une architecture dite de multitraitement asymétrique, également appelée architecture AMP (de l'anglais *Asymetrical Multi-Processing).*

A cet effet, l'invention a pour objet un processeur graphique selon la revendication 1.

Ainsi, le processeur graphique selon l'invention permet, de par l'espace réservé de stockage de N ensembles de descripteur(s) et le séquenceur apte à traiter successivement les descripteurs stockés dans ledit espace de stockage, d'effectuer un partage des ressources du processeur graphique directement au niveau du processeur graphique, et non plus au niveau du système d'exploitation ainsi qu'effectué avec une plateforme et un processeur graphique de l'état de la technique.

Suivant d'autres aspects avantageux de l'invention, le processeur graphique est selon l'une quelconque des revendications 2 à 4.

L'invention a également pour objet une plateforme selon la revendication 5.

L'invention a également pour objet un procédé de gestion de ressource(s) d'un processeur graphique, selon la revendication 6.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système avionique selon l'invention, destiné à être embarqué à bord d'un aéronef et comprenant une plateforme avionique, la plateforme comportant un processeur central et un processeur graphique relié au processeur central ;
- la figure 2 est un organigramme d'un procédé, selon l'invention, de gestion de ressource(s) du processeur graphique de la figure 1, le procédé étant mis en oeuvre par ledit processeur graphique ;
- la figure 3 est un chronogramme schématique représentant la préparation par le processeur central, puis par le processeur graphique, et enfin l'affichage d'une image sur un écran d'affichage, selon un premier mode de fonctionnement ;
- la figure 4 est une vue analogue à celle de la figure 3, selon un deuxième mode de fonctionnement ; et
- la figure 5 est une vue analogue à celle de la figure 3 selon un troisième mode de fonctionnement.

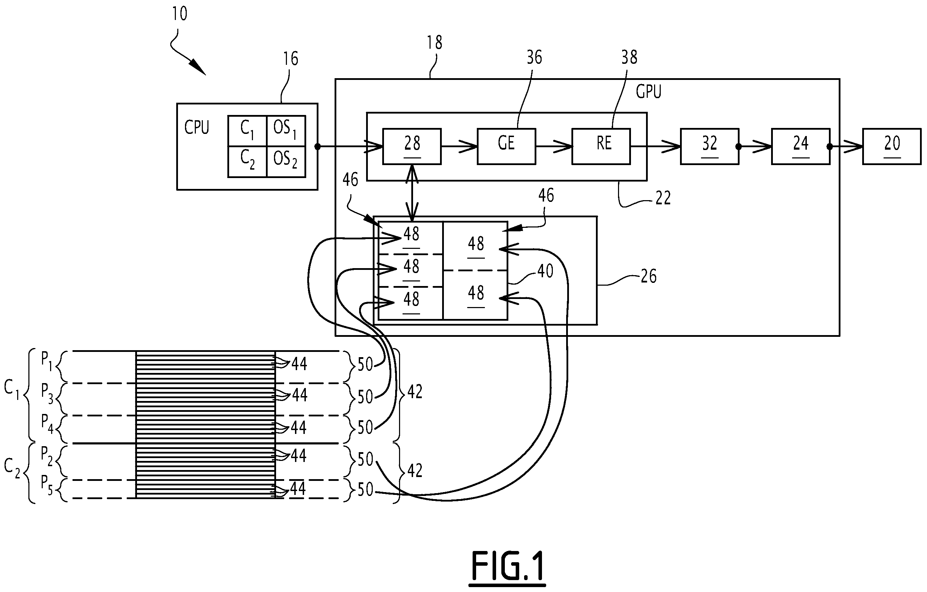

Sur la figure 1, un système avionique 10, destiné à être embarqué à bord d'un aéronef, non représenté, comprend une plateforme avionique 12.

La plateforme avionique 12 comprend un processeur central 16, également appelé CPU (de l'anglais *Central Processing Unit*), et un processeur graphique 18, également appelé GPU (de l'anglais *Graphie Processing Unit*), le processeur graphique 18 étant relié au processeur central 16. Le processeur central 16 est un processeur central multicoeurs ayant N coeurs C₁, ... C_{N} distincts, N étant un nombre entier supérieur ou égal à 2.

En complément, la plateforme 12 comprend un écran d'affichage 20, relié par exemple au processeur graphique 18.

En complément facultatif, l'architecture de la plateforme 12 est une architecture dite de multitraitement asymétrique, également appelée architecture AMP (de l'anglais *Asymetrical Multi-Processing*)*.* Selon ce complément facultatif avec architecture AMP, la plateforme 12 est en outre apte à héberger N systèmes d'exploitation OS₁, ... OS_{N} distincts, chaque système d'exploitation OS₁, ... OS_{N} étant associé à un coeur respectif C₁, ... C_{N}.

Le processeur central 16 est connu en soi. Dans l'exemple de la figure 1, le processeur central 16 représenté est, par souci de simplification du dessin, un processeur à 2 coeurs C₁, C₂. En variante, non représentée, le nombre N de coeurs C₁, ... C_{N} distincts est égal à 2 x P, où P est un multiple entier supérieur ou égal à 2.

Le processeur graphique 18 comprend un module 22 de génération d'au moins un ensemble de pixel(s) à afficher et un module 24 d'affichage de chaque ensemble de pixel(s) sur l'écran d'affichage 20, le module d'affichage 24 étant relié au module de génération 22.

Le processeur graphique 18 comprend en outre une mémoire 26 de stockage de données et un séquenceur 28. Le séquenceur 28 est par exemple intégré au module de génération 22. En variante, le séquenceur 28 est connecté en entrée du module de génération 22.

Le module de génération 22 est configuré pour générer au moins un ensemble de pixel(s) à afficher.

En complément facultatif, le module de génération 22 est configuré pour générer au moins une couche intermédiaire d'images, non représentée, chaque couche intermédiaire comportant un ensemble respectif de pixel(s).

Selon ce complément facultatif, le processeur graphique 18 comprend en outre un module 32 de composition d'une image à partir de la ou des couches intermédiaires générée(s) par le module de génération 22, le module d'affichage 24 étant alors apte à afficher l'image composée par le module de composition 32.

Le module de génération 22 comporte, par exemple, un moteur géométrique 36 apte à générer au moins un groupe de primitive(s) géométrique(s) et un moteur de rendu 38 apte à convertir chaque groupe de primitive(s) géométrique(s) en un ensemble respectif de pixel(s). Le moteur géométrique 36 est également appelé GE (de l'anglais *Géométrie Engine*), et le moteur de rendu 38 est également appelé RE (de l'anglais *Raster Engine,* ou encore *Rendering Engine*)*.*

Le module de génération 22, et en complément facultatif le module de composition 32, forment une chaîne de création graphique d'une image respective, apte à être affichée à l'écran 20 par le module d'affichage 24. La chaîne de création graphique est également appelée pipeline graphique.

Le module d'affichage 24 est configuré pour afficher de manière générale chaque ensemble de pixel(s) sur l'écran 20, notamment pour afficher chaque image sur l'écran 20.

En complément facultatif, le module d'affichage 24 est également configuré pour mélanger une image respective avec une vidéo, par exemple stocké dans la mémoire de stockage 26, puis pour afficher le mélange 40 de l'image et de la vidéo sur l'écran d'affichage 20.

La mémoire 26 est reliée à chacun des modules du processeur graphique 18, notamment au module de génération 22 et au module d'affichage 24, ainsi qu'en complément facultatif au module de composition 32.

Selon l'invention, la mémoire 26 comporte un espace réservé 40 de stockage de N ensembles 42 de descripteur(s) 44, chaque ensemble 42 de descripteur(s) 44 étant associé à un coeur C₁, ... C_{N} respectif du processeur central 16 multicoeurs, chaque descripteur 44 identifiant un lot de ressource(s) du processeur graphique 18 pour l'affichage de donnée(s) par une application logicielle destinée à être exécutée via ledit coeur C₁, ... C_{N} respectif.

Chaque système d'exploitation OS₁, ... OS_{N} est, par exemple, configuré pour créer l'ensemble 42 de descripteur(s) 44 pour le coeur C₁, ... C_{N} auquel il est associé.

Le séquenceur 28 est configuré pour traiter successivement les descripteurs 44 stockés dans l'espace réservé de stockage 40.

Le module de composition 32 est configuré pour composer chaque image à partir de la ou des couches intermédiaires correspondantes, notamment en positionnant la ou lesdites couches intermédiaires, par exemple les unes par rapport aux autres, et en les superposant le cas échéant.

Le moteur géométrique 36, ou GE, est configuré pour générer au moins un groupe de primitive(s) géométrique(s), c'est-à-dire pour générer une portion d'image vectorielle.

Le moteur de rendu 38 est ensuite configuré pour convertir chaque groupe de primitive(s) géométrique(s) en un ensemble respectif de pixel(s), c'est-à-dire pour convertir la portion d'image vectorielle correspondant au groupe de primitive(s) géométrique(s) en une portion d'image matricielle correspondant audit ensemble de pixel(s). Cette conversion effectuée par le moteur de rendu 38 est également appelée rastérisation, ou encore matricialisation.

L'espace réservé de stockage 40 comporte N zones distinctes de stockage 46, chaque zone 46 étant apte à stocker un ensemble 42 respectif de descripteur(s) 44, les N zones de stockage 46 étant disjointes les unes des autres.

Le séquenceur 28 est configuré en outre pour traiter, zone 46 par zone 46, les descripteurs 44 stockés dans l'espace réservé de stockage 40.

Chaque descripteur 44 comporte une ou plusieurs informations choisies parmi le groupe consistant en : un identifiant d'un contexte graphique ; un identifiant d'une surface graphique ; un temps maximal d'exécution ; et un identifiant d'une pile de commande et d'exécution.

Par contexte graphique, également appelé contexte d'exécution graphique, on entend une collection d'états paramétrant le fonctionnement de la chaîne de création graphique, tels que par exemple des définitions de lois de transformation géométrique, des valeurs de couleurs de tracé, ou des valeurs d'effacement, ou encore des identifications de textures à appliquer. L'homme du métier comprendra alors que le contexte d'exécution graphique correspond, par exemple, au *« Rendering Context »,* défini dans le standard EGL, en particulier dans le document intitulé « *OpenGL^{®} ES Native Platform Graphics Interface* », version 1.1.02 de novembre 2004 et suivantes, .

Par surface graphique, on entend un espace de stockage de pixels, destiné ou non à l'affichage, dans lequel la chaîne de création graphique effectue une opération de tracé. L'homme du métier comprendra alors que la surface graphique correspond, par exemple, à la « *Drawing Surface* », définie également dans le standard EGL précité.

Chaque zone de stockage 46 comporte un ou plusieurs secteurs distincts de stockage 48, chaque secteur 48 étant apte à stocker un sous-ensemble 50 respectif de descripteur(s) 44 pour une application logicielle respective apte à être exécutée par le coeur C₁, ..., C_{N} associé à ladite zone de stockage 46, le ou les secteurs de stockage 48 étant disjoints les uns des autres.

Le séquenceur 28 est configuré en outre pour traiter, secteur 48 par secteur 48, les descripteurs 44 stockés dans une zone de stockage 46 respective.

Dans l'exemple de la figure 1, l'espace réservé de stockage 40 comporte deux zones de stockage 46 distinctes, à savoir une zone de stockage 46 respective pour chacun des deux coeurs C₁, C₂. La zone de stockage 46 associée au premier coeur C₁ comporte trois secteurs de stockage 48, chacun étant par exemple associé à une partition P₁, P₃, P₄ respective apte à être exécutée par ledit premier coeur C₁ ; et la zone de stockage 46 associée au deuxième coeur C₂ comporte deux secteurs de stockage 48, chacun étant associé à une partition P₂, P₅ respective apte à être exécutée par ledit deuxième coeur C₂.

L'homme du métier comprendra alors que les descripteurs 44 sont de préférence répartis d'abord par coeur C₁, ..., C_{N}, puis par partition P₁, ..., P_{N} s'exécutant respectivement chacune sur un coeur C₁, ..., C_{N} correspondant.

Afin de transposer à la gestion des coeurs, le concept de partition système défini dans l'ARP4754 [*Aerospace Recommended Practice 4754, SAE*], version de novembre 1996 et suivantes, où les applications logicielles implémentent une gestion de partition, telle que décrite par l'ARINC 653 P1-5 (*Avionics Application Software Standard Interface part 1 : required services, Issue 5,* septembre 2019), par partition d'un, ou pour un, coeur C₁, ..., C_{N} correspondant, on entend une partie des ressources associées audit coeur C₁, ..., C_{N} correspondant, et chaque partition est généralement associée à l'exécution d'une ou plusieurs applications logicielles respectives, de préférence à l'exécution d'une unique application logicielle respective. Autrement dit, une partition P₁, ..., P₅ respective est de préférence allouée à chaque application logicielle respective à exécuter par le coeur C₁, ..., C_{N} correspondant.

En complément facultatif, une temporalisation maximale est associée à chaque secteur de stockage 48. Selon ce complément facultatif, le séquenceur 28 est configuré en outre pour, lorsque la temporisation maximale est atteinte, interrompre le traitement du ou des descripteurs 44 pour un secteur 48 courant et pour passer au traitement du ou des descripteurs 44 pour un secteur 48 suivant.

Selon ce complément facultatif encore, le séquenceur 28 est, de préférence et en cas d'interruption d'un traitement respectif de descripteur(s) 44, configuré pour sauvegarder, dans un emplacement de stockage (non représenté), un état d'exécution de chaque descripteur 44 dont le traitement est interrompu, en vue d'une reprise ultérieure du traitement interrompu. Chaque emplacement de stockage est typiquement inclus dans la mémoire 26, tout en correspondant à un espace mémoire distinct de l'espace réservé de stockage 40.

Chaque temporisation maximale est par exemple comprise entre 1 ms et 20 ms, de préférence encore comprise entre 2 ms et 10 ms.

En complément facultatif encore, un niveau de priorité est associé à chaque secteur de stockage 48. Selon ce complément facultatif, lorsqu'une zone respective de stockage 46 comporte plusieurs secteurs distincts de stockage 48, le séquenceur 28 est configuré en outre pour traiter lesdits secteurs de stockage 48 selon un ordre monotone de leur niveau de priorité. A titre d'exemple, si le niveau de priorité le plus important est un niveau 1, et que des niveaux de priorité moindres sont des niveaux 2 et suivant(s), le séquenceur 28 est alors configuré pour traiter lesdits secteurs de stockage 48 selon un ordre croissant des niveaux de priorité.

Dans l'exemple de la figure 1, les partitions P₁ pour le premier coeur C₁ et respectivement P₂ pour le deuxième coeur C₂ ont le niveau de priorité le plus important, par exemple le niveau 1, et les secteurs de stockage 48 associés à ces partitions P₁, P₂ seront alors traités en priorité par le séquenceur 28. Les partitions P₃, P₄ associées au premier coeur C₁, et respectivement P₅ associée au deuxième coeur C₂, présentent un niveau de priorité moindre, par exemple un niveau 2, et les secteurs de stockage 48 associés auxdites partitions P₃, P₄ et P₅ seront alors traitées de manière moins prioritaire par le séquenceur 28, c'est-à-dire après le traitement des secteurs de stockage 48 associés aux partitions P₁ et P₂.

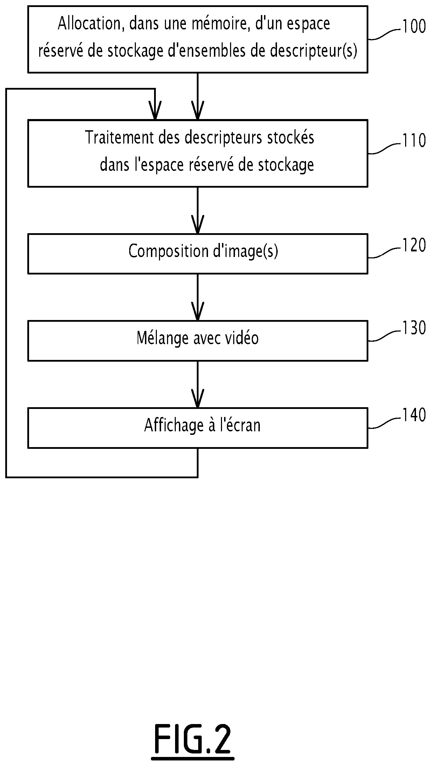

Le fonctionnement du système avionique 10 selon l'invention, et en particulier du processeur graphique 18, va désormais être expliqué à l'aide de la figure 2 représentant un organigramme d'un procédé d'affichage de pixels à l'écran 20, et en particulier d'un procédé de gestion de ressources du processeur graphique 18, mis en oeuvre par le processeur graphique 18.

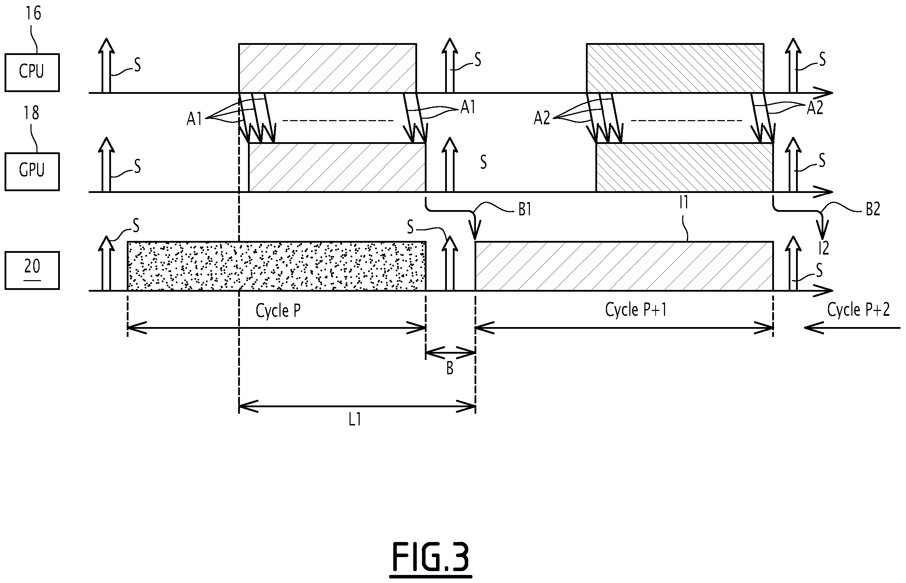

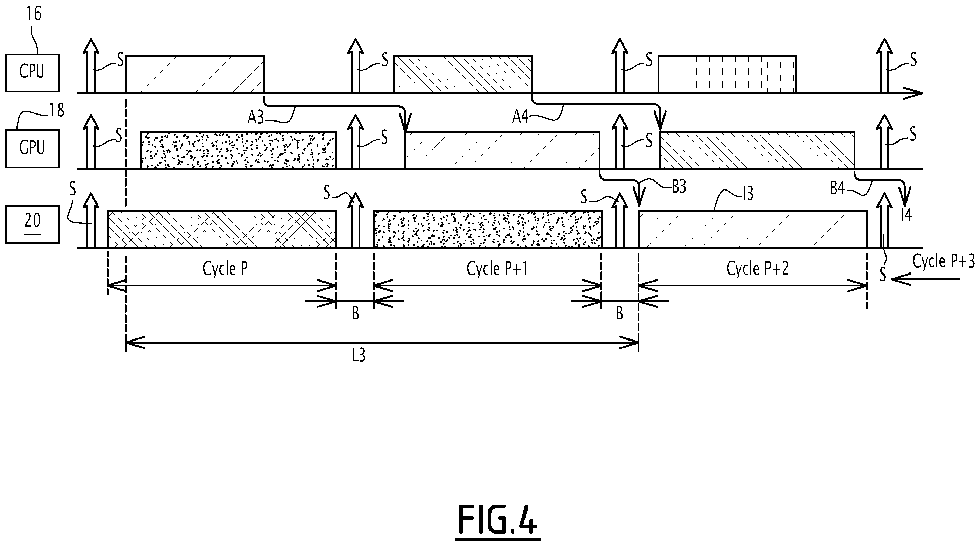

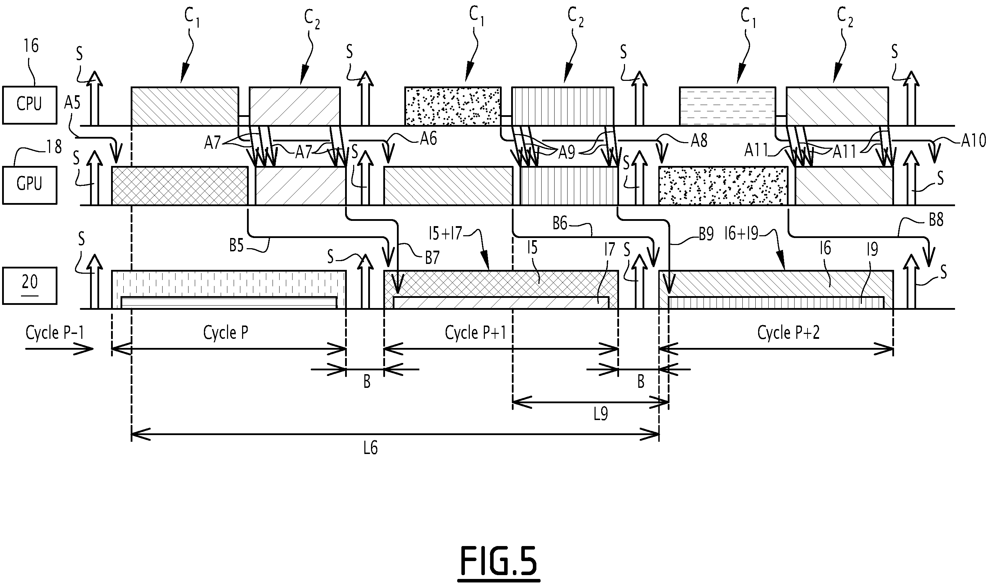

Ce fonctionnement du système avionique 10 va également être expliqué en regard des figures 3 à 5 illustrant différents modes de fonctionnement du système avionique 10, la figure 3 correspondant à un premier mode de fonctionnement, dit immédiat, la figure 4 correspondant à un deuxième mode de fonctionnement, dit temporisé, et la figure 5 correspondant à un troisième mode de fonctionnement, dit mixte.

Sur la figure 2, lors d'une étape initiale 100, le processeur graphique 18, alloue dans sa mémoire 26, l'espace réservé de stockage 40 pour les N ensembles 42 de descripteur(s) 44. Comme décrit précédemment, chaque ensemble 42 de descripteur(s) 44 est associé à un coeur C₁, ..., C_{N} respectif du processeur central 16 multicoeurs, et chaque descripteur 44 identifie un lot de ressource(s) du processeur graphique 18 pour l'affichage de donnée(s) par une application logicielle destinée à être exécutée via ledit coeur C₁, ..., C_{N} respectif.

Lorsque l'espace réservé de stockage 40 comporte N zones distinctes de stockage 46, chaque zone 46 étant apte à stocker un ensemble 42 respectif de descripteur(s) 44, l'allocation de chaque zone respective de stockage 46 est également effectuée lors de cette étape initiale d'allocation 100. Lors de cette allocation de cette zone de stockage 46, les N zones de stockage 46 sont réparties au sein de l'espace réservé de stockage 40 de manière à être disjointes les unes des autres. Autrement dit, il n'y a pas de chevauchement entre deux zones de stockage 46.

Lorsque chaque zone de stockage 46 respective comporte plusieurs secteurs distincts de stockage 48, chaque secteur 48 étant apte à stocker un sous-ensemble 50 respectif de descripteur(s) 44 pour une application logicielle respective, l'allocation desdits secteurs de stockage 48 est également effectuée lors de cette étape d'allocation 100. L'homme du métier comprendra alors que chaque secteur 48 est alloué au sein de la zone de stockage 46 correspondant au coeur C₁, ..., C_{N} qui est apte à exécuter l'application logicielle associée audit secteur 48.

Après cette étape initiale d'allocation 100, le processeur graphique 18 effectue régulièrement une étape 110 de traitement de descripteurs 44, suivie d'une étape 120 de composition d'image, suivie d'une étape optionnelle 130 de mélange avec une vidéo, suivie enfin d'une étape 140 d'affichage à l'écran 20 de l'image, avec éventuellement la vidéo, générée lors des étapes 110 à 130 précédentes.

Lors de l'étape de traitement 110, le processeur graphique 18, et en particulier son séquenceur 28, traite successivement les descripteurs 44 stockés dans l'espace réservé de stockage 40.

Lors de cette étape de traitement 110, et lorsqu'en complément facultatif l'espace réservé de stockage 40 comporte N zones distinctes de stockage 46, le séquenceur 28 est configuré pour traiter, zone 46 par zone 46, les descripteurs 44 stockés dans l'espace réservé de stockage 40.

Lorsque chaque zone de stockage 46 comporte elle-même plusieurs secteurs distincts de stockage 48, le séquenceur 28 est configuré pour traiter, secteur 48 par secteur 48, les descripteurs 44 stockés dans une zone de stockage 46 respective.

Lorsqu'on complément facultatif encore une temporisation maximale respective est associée à chaque secteur de stockage 48, le séquenceur 28 interrompt, lorsqu'une temporisation maximale respective est atteinte le traitement du ou des descripteurs 44 pour un secteur 48 courant, et passe alors au traitement du ou des descripteurs 44 pour le secteur 48 suivant. Selon ce complément facultatif, et en cas d'interruption d'un traitement respectif de descripteur(s) 44, le séquenceur 28 sauvegarde de préférence un état respectif d'exécution de chaque descripteur 44 dont le traitement est interrompu, ceci dans l'emplacement de stockage et en vue d'une reprise ultérieure dudit traitement interrompu.

Lorsqu'on complément facultatif encore un niveau de priorité respectif est respecté à chaque secteur 48, le séquenceur 28 traite de préférence lesdits secteurs de stockage 48 selon un ordre monotone de leurs niveaux de priorité respectifs.

L'homme du métier comprendra alors que cette étape de traitement 110 permet, via le traitement desdits descripteurs 44, d'exécuter le rendu de commandes graphiques, préalablement produites par le processeur central 16. Cette exécution du rendu des commandes graphiques comporte par exemple, une génération de primitive(s) géométrique(s) effectuée par le moteur géométrique 36, également noté GE, suivie d'une conversion de la ou des primitive(s) géométrique(s) généré(s) en un ou plusieurs ensembles respectifs de pixel(s), cette conversion étant effectuée par le moteur de rendu 38, également noté RE.

Suite à cette étape de traitement 110 aboutissant à la génération d'un ou plusieurs ensembles respectifs de pixel(s), le processeur graphique 18 effectue, via son module de composition 32 et lors de l'étape suivante 130, la composition d'image. Cette composition d'image consiste typiquement à composer chaque image à partir de couches intermédiaires reçues de la part du module de génération 22, et consiste plus particulièrement en un positionnement des couches intermédiaires les unes par rapport aux autres, ainsi qu'en superposition de certaines couches les unes sur les autres.

L'étape de composition 130 est suivie optionnellement d'une étape de mélange 140 lors de laquelle le processeur graphique 18 mélange, via son module d'affichage 24, jouant également le rôle de module de mélange, une image composée par le module de composition 32 avec une vidéo ou un flux vidéo, stockée dans la mémoire de stockage 26, afin d'afficher lors de l'étape suivante 150, le mélange d'une image et d'une vidéo.

Bien entendu, en l'absence de l'étape de mélange 140, le module d'affichage 24 affiche alors, lors de l'étape d'affichage 150, la ou les images composées à l'écran 20.

Les premier, deuxième et troisième modes de fonctionnement du système avionique selon l'invention vont désormais être expliqués en regard des figures 3 à 5.

Sur la figure 3, le premier mode de fonctionnement, dit immédiat, correspond à une exécution, par le processeur graphique 18, du rendu des commandes graphiques produites par le processeur central 16, ceci au fur et à mesure qu'elles sont produites par le processeur central 16. Autrement dit, à chaque cycle d'exécution, les commandes graphiques produites par le processeur central 16 sont directement transmises au processeur graphique 18, au cours du même cycle, comme représenté par les flèches A1 pour le cycle P, ou encore par les flèches A2 pour le cycle P+1, afin que le rendu de ces commandes graphiques soit exécuté par le processeur graphique 18 au cours de ce même cycle.

L'homme du métier notera que la transmission, entre le processeur central 16 et le processeur graphique 18, des commandes graphiques s'accompagne, selon l'invention de la transmission des descripteurs 44 associés à ces commandes graphiques, ceci afin de répartir ensuite les ressources du processeur graphique 18 lors de l'exécution du rendu desdites commandes graphiques par le processeur graphique 18. Autrement dit, chaque flèche A1, A2 sur la figure 3, puis chacune des flèches A3 à A10 sur les figures 4 et 5 suivantes, représente la transmission à la fois de commande(s) graphique(s) et de descripteur(s) 44 associé(s), ceci depuis le processeur central 16 vers le processeur graphique 18.

L'homme du métier observera également que le décalage temporel entre la production des commandes graphiques au niveau du processeur central 16 et l'exécution du rendu des commandes graphiques au niveau du processeur graphique 18 est seulement dû au délai de transmission, entre le processeur central 16 et le processeur graphique 18, de la ou des commandes graphiques correspondantes et du ou des descripteurs 44 associés.

Selon ce premier mode de fonctionnement, les commandes graphiques produites par le processeur central 16 au cours du cycle P, et dont le rendu a été exécuté par le processeur graphique 18 au cours du même cycle P, résultent alors en l'affichage d'une image au cours du cycle suivant P+1, comme illustré avec l'affichage de l'image I1 sur la figure 3. L'homme du métier observera en outre qu'entre deux cycles successifs P, P+1 une commutation est nécessaire afin de passer de l'affichage d'une image à l'affichage de l'image suivante, chaque commutation étant représentée par une flèche S verticale et en trait épais, et se traduisant par une période de blanc B à l'écran d'affichage 20.

L'homme du métier comprendra en outre qu'il est nécessaire d'effectuer une commutation de mémoires tampon de trame (de l'anglais *frame buffer*) entre le processeur graphique 18 et l'écran d'affichage 20 à chaque commutation S, cette commutation de mémoires tampon de trame permettant de transmettre les informations relatives à l'affichage de l'image, depuis le processeur graphique 18 vers l'écran d'affichage 20, comme représenté par la flèche B1 pour l'image I1.

De manière analogue, les commandes graphiques produites par le processeur central 16 lors du cycle P+1, et dont le rendu est exécuté par le processeur graphique 18 lors du même cycle P+1, comme illustré par les flèches A2 pour la transmission des commandes graphique set descripteurs 44 associés, résultent ensuite en l'affichage de l'image I2 lors du cycle P+2, les informations relatives à cette image I2 étant transmises entre le processeur graphique 18 et l'écran d'affichage 20 lors de la commutation S entre le cycle P+1 et le cycle P+2, comme représenté par la flèche B2.

L'homme du métier comprendra que sur chacune des figures 3 à 5, la production d'un groupe de commande(s) graphique(s) par le processeur central 16, l'exécution du rendu de ce même groupe de commande(s) graphique(s) par le processeur graphique 18, et enfin l'affichage sur l'écran 20 du rendu de ce même groupe de commande(s) graphique(s), sont schématisés par des rectangles ayant le même remplissage, afin d'illustrer qu'il s'agit d'actions successives associés à un même groupe de commande(s) graphique(s).

La figure 4 illustre le deuxième mode de fonctionnement, dit temporisé, dans lequel les commandes graphiques produites lors du cycle P par le processeur central 16 ne sont traitées par le processeur graphique 18 que lors du cycle suivant P+1, ce qui résulte alors en l'affichage de l'image lors du cycle encore suivant P+2 sur l'écran d'affichage 20.

Dans l'exemple de la figure 4, l'image I3 affichée lors du cycle P+2 résulte ainsi de commandes graphiques produites par le processeur central 16 lors du cycle P, transmises ensuite, avec les descripteurs 44 associés, au processeur graphique 18 lors de la commutation S entre le cycle P et le cycle P+1, comme représenté par la flèche A3. L'exécution du rendu graphique des commandes produites lors du cycle P est alors effectuée par le processeur graphique 18 lors du cycle suivant P+1 et l'image I3 est ensuite affichée lors du cycle encore suivant P+2, les données relatives à l'image relative I3 étant transmises entre le processeur graphique 18 et l'écran d'affichage 20 lors de la commutation S entre le cycle P+1 et le cycle P+2, comme représenté par la flèche B3.

Là encore, chaque commutation entre deux cycles successifs se traduit par une période de blanc B à l'écran d'affichage 20.

De manière analogue, les commandes graphiques produites par le processeur central 16 lors du cycle P+1, sont transmises, avec les descripteurs 44 associés, lors de la commutation S entre le cycle P+1 et le cycle P+2, comme représenté par la flèche A4, afin que le rendu de ces commandes graphiques soient exécuté lors du cycle suivant P+2 par le processeur graphique 18, pour résulter enfin en affichage de l'image I4 lors du cycle encore suivant P+3, les informations à afficher pour l'image I4 étant transmises entre le processeur graphique 18 et l'écran d'affichage 20 lors de la commutation S entre le cycle P+2 et le cycle P+3, comme représenté par la flèche B4.

L'homme du métier observera alors que selon le premier mode de fonctionnement, dit immédiat et visible à la figure 3, la latence entre un instant temporel de production de la commande graphique et l'affichage résultant à l'écran d'affichage 20 est réduite, et est notamment plus faible que selon le deuxième mode de fonctionnement, dit temporisé. A titre d'exemple de comparaison entre la latence selon le premier mode de fonctionnement et la latence selon le deuxième mode de fonctionnement, l'homme du métier observera que la latence, représentée par la flèche L1 visible à la figure 3, pour l'affichage de l'image I1 selon le premier mode de fonctionnement est bien plus faible que la latence, représentée par la flèche L3 visible à la figure 4, pour l'affichage de l'image I3 selon le deuxième mode de fonctionnement.

Inversement, l'homme du métier comprendra que le premier mode de fonctionnement, dit immédiat, impose d'avoir un processeur central 16 qui soit synchrone du processeur graphique 18, et les temps d'exécution du processeur central 16 dépendent alors des temps d'exécution correspondant du processeur graphique 18, ce qui peut s'avérer pénalisant en terme de performance.

En revanche, selon le deuxième mode de fonctionnement, dit temporisé, le processeur central 16 fonctionne de manière asynchrone par rapport au processeur graphique 18, et les temps de traitement sont alors découplés entre le processeur central 16 et le processeur graphique 18.

Sur la figure 5, le troisième mode de fonctionnement, dit mixte, est un mélange des premier et deuxième modes de fonctionnement décrits précédemment. Plus précisément, au cours de chaque cycle P, P+1, P+2, le système avionique 10 fonctionne partiellement en mode temporisé, correspondant au deuxième mode de fonctionnement décrit précédemment au regard de la figure 4, et partiellement en mode immédiat, correspondant au premier mode de fonctionnement décrit en regard de la figure 3.

Le processeur central 16 étant un processeur multicoeurs, cette répartition des modes de fonctionnement est par exemple effectuée coeur par coeur, avec un ou plusieurs coeurs fonctionnant en mode immédiat et un ou plusieurs coeurs fonctionnant en mode temporisé. Autrement dit, au cours de chaque cycle P, P+1, P+2, d'une part, certaines commandes graphiques produites par le processeur central 16 sont transmises avec les descripteurs 44 correspondants au cours du même cycle respectif, au processeur graphique 18 afin que leur rendu soit exécuté au cours de ce même cycle, cette transmission immédiate étant illustrée par les flèches A7 pour le cycle P, A9 pour le cycle P+1 et A11 pour le cycle P+2. D'autre part, d'autres commandes graphiques produites par le processeur central 16 au cours d'un cycle P, P+1, P+2, typiquement par un autre coeur du processeur central 16, sont transmises seulement au cycle suivant P+1, P+2, P+3 au processeur graphique 18 afin que leur rendu soit exécuté lors de ce cycle suivant P+1, P+2, P+3, ce qui résulte alors en l'affichage de la portion d'image correspondante au cycle encore suivant P+2, P+3, P+4.

Dans l'exemple de la figure 5, la combinaison de portions I5 et I7 d'images affichées lors du cycle P+1 résulte alors :
- d'une part, de commandes graphiques produites lors du cycle P-1, par exemple par le premier coeur C₁, transmises lors de la commutation S entre le cycle P-1 et le cycle P depuis le processeur central 16 vers le processeur graphique 18, comme représenté par la flèche A5, pour que leur rendu soit exécuté lors du cycle P, et que les informations de rendu soient alors transmises depuis le processeur graphique 18 vers l'écran d'affichage 20 lors de la commutation S entre le cycle P et le cycle P+1, comme représenté par la flèche B5, pour l'affichage de la portion d'image I5 lors du cycle P+1 ; et
- d'autre part, de la production de commandes graphiques par le processeur central 16, par exemple par le deuxième coeur C₂, puis de la transmission au cours de ce même cycle P et au processeur graphique 18, comme représenté par les flèches A7, des commandes produites par le deuxième coeur C₂, afin que leur rendu soit exécuté par le processeur graphique 18, toujours au cours de ce cycle P, ledit rendu étant alors transmis lors de la commutation S entre le cycle P et le cycle P+1, comme représenté par la flèche B7, pour l'affichage de la portion d'image I7 lors du cycle P+1.

De manière analogue, les portions I6 et I9 d'images affichées lors du cycle P+2 sur l'écran d'affichage 20 résultent, d'une part, des commandes graphiques produites, par exemple par le premier coeur C₁ lors du cycle P, transmises selon la flèche A6 lors de la commutation S entre le cycle P et le cycle P+1 au processeur graphique 18, dont le rendu est ensuite exécuté lors du cycle P+1 par le processeur graphique 18, ledit rendu étant alors enfin transmis, selon la flèche B6, lors de la commutation S entre le cycle P+1 et le cycle P+2, en vue de l'affichage de la portion d'image I6 lors du cycle P+2 ; et d'autre part, de commandes graphiques produites lors du cycle P+1, par exemple par le deuxième coeur C₂, lesdites commandes étant transmises selon les flèches A9 lors de ce même cycle P+1 au processeur graphique 18 afin que leur rendu soit exécuté lors de ce même cycle P+1, et le rendu étant ensuite transmis lors de la commutation S entre le cycle P+1 et le cycle P+2 selon la flèche B9, en vue de l'affichage de la portion d'image I9 lors du cycle P+2.

L'homme du métier observera alors que la latence, représentée par la flèche L9 pour la portion d'image I9 est bien plus faible que la latence, représentée par la flèche L6 pour la portion d'image I6, ce qui permet en d'autres termes d'avoir des latences différenciées pour des portions d'images I6, I9 affichées au cours d'un même cycle, tel que le cycle P+2 dans cet exemple de la figure 5.

L'homme du métier comprendra alors que ce troisième mode de fonctionnement illustré sur la figure 5, dit mode mixte, permet d'afficher plus rapidement des données qui sont importantes pour le système avionique 10, tout en autorisant également un affichage plus lent pour des données de moindre importance, tel que des données d'arrière-plan.

Le mode mixte permet alors typiquement d'afficher en mode immédiat, c'est-à-dire plus rapidement, des données importantes, telles que la position, l'assiette, le roulis, l'altitude, c'est-à-dire des paramètres minimaux de pilotage de l'aéronef, ceci afin de privilégier la sécurité du vol, avec une moindre latence d'affichage pour ces données cruciales.

Ainsi, l'espace réservé de stockage 40 et le traitement successif des descripteurs 44 par le séquenceur 28 permet au processeur graphique 18 de gérer des accès, à ses ressources, émanant de plusieurs coeurs C₁, ..., C_{N} du processeur central 16, ce qui permet alors d'effectuer un partage de ressources directement au niveau du processeur graphique 18, plutôt qu'au niveau d'un système d'exploitation qui serait commun à la pluralité de coeurs au sein du processeur central 16.

L'espace réservé de stockage 40 pour les descripteurs 44 et le traitement desdits descripteurs 44 par le séquenceur 28 permet alors d'avoir un fonctionnement de la plateforme avionique 12 selon l'architecture de multitraitement asymétrique, dite architecture AMP.

## Revendications

1. Processeur graphique (18) destiné à être relié à un processeur central (16) multicoeurs ayant N coeurs (C₁, ..., C_{N}) distincts, N étant un nombre entier supérieur ou égal à 2, le processeur graphique (18) comprenant une mémoire (26),
**caractérisé en ce que** la mémoire (26) comporte un espace réservé (40) de stockage de N ensembles (42) de descripteur(s) (44), chaque ensemble (42) de descripteur(s) (44) étant associé à un coeur (C₁, ..., C_{N}) respectif du processeur central (16) multicoeurs, chaque descripteur (44) identifiant un lot de ressource(s) du processeur graphique (18) pour l'affichage de donnée(s) par une application logicielle destinée à être exécutée via ledit coeur (C₁, ..., C_{N}) respectif,
l'espace réservé de stockage (40) comportant N zones distinctes de stockage (46),
chaque zone (46) étant apte à stocker un ensemble (42) respectif de descripteur(s) (44), les N zones de stockage (46) étant disjointes les unes des autres,
chaque zone de stockage (46) comportant un ou plusieurs secteurs distincts de stockage (48), chaque secteur (48) étant apte à stocker un sous-ensemble (50) respectif de descripteur(s) (44) pour une application logicielle respective apte à être exécutée par le coeur (C₁, ..., C_{N}) associé à ladite zone de stockage (46), le ou les secteurs de stockage (48) étant disjoints les uns des autres, chaque secteur de stockage (48) étant associé à une partition (P₁, ..., P₅) respective apte à être exécutée par un coeur (C₁, ..., C_{N}) correspondant, et
**en ce que** le processeur graphique (18) comprend en outre un séquenceur (28) configuré pour traiter successivement les descripteurs (44) stockés dans l'espace réservé de stockage (40), le séquenceur (28) étant configuré pour traiter secteur (48) par secteur (48) les descripteurs (44) stockés dans une zone de stockage (46) respective.

2. Processeur graphique (18) selon la revendication 1, dans lequel une temporisation maximale est associée à chaque secteur de stockage (48), et le séquenceur (28) est configuré pour, lorsque la temporisation maximale est atteinte, interrompre le traitement du ou des descripteurs (44) pour un secteur (48) courant et pour passer au traitement du ou des descripteurs (44) pour un secteur (48) suivant ;
le séquenceur (28) étant, de préférence et en cas d'interruption d'un traitement respectif de descripteur(s) (44), configuré pour sauvegarder, dans un emplacement de stockage, un état d'exécution de chaque descripteur (44) dont le traitement est interrompu, en vue d'une reprise ultérieure du traitement interrompu.

3. Processeur graphique (18) selon la revendication 1 ou 2, dans lequel un niveau de priorité est associé à chaque secteur (48), et lorsqu'une zone respective de stockage comporte plusieurs secteurs distincts de stockage (48), le séquenceur (28) est configuré en outre pour traiter lesdits secteurs de stockage (48) selon un ordre monotone de leurs niveaux de priorité.

4. Processeur graphique (18) selon l'une quelconque des revendications précédentes, dans lequel chaque descripteur (44) comporte une ou plusieurs informations choisies parmi le groupe consistant en : un identifiant d'un contexte graphique ; un identifiant d'une surface graphique ; un temps maximal d'exécution ; et un identifiant d'une pile de commande et d'exécution.

5. Plateforme (12) comprenant un processeur graphique (18) et un processeur central (16) multicoeurs ayant N coeurs (C₁, ..., C_{N}) distincts, N étant un nombre entier supérieur ou égal à 2, le processeur graphique (18) étant relié au processeur central (16),
**caractérisé en ce que** le processeur graphique (18) est selon l'une quelconque des revendications précédentes.

6. Procédé de gestion de ressource(s) d'un processeur graphique (18), le procédé étant mis en oeuvre par le processeur graphique (18), le processeur graphique (18) comprenant une mémoire (26) et étant relié à un processeur central (16) multicoeurs ayant N coeurs (C₁, ..., C_{N}) distincts, N étant un nombre entier supérieur ou égal à 2,
le procédé comprenant les étapes consistant à :
- allouer (100), dans la mémoire (26), un espace réservé (40) de stockage de N ensembles (42) de descripteur(s) (44), chaque ensemble (42) de descripteur(s) (44) étant associé à un coeur (C₁, ..., C_{N}) respectif du processeur central (16) multicoeurs, chaque descripteur (44) identifiant un lot de ressource(s) du processeur graphique (18) pour l'affichage de donnée(s) par une application logicielle destinée à être exécutée via ledit coeur (C₁, ..., C_{N}) respectif,
l'espace réservé de stockage (40) comportant N zones distinctes de stockage (46), chaque zone (46) étant apte à stocker un ensemble (42) respectif de descripteur(s) (44), les N zones de stockage (46) étant disjointes les unes des autres,
chaque zone de stockage (46) comportant un ou plusieurs secteurs distincts de stockage (48), chaque secteur (48) étant apte à stocker un sous-ensemble (50) respectif de descripteur(s) (44) pour une application logicielle respective apte à être exécutée par le coeur (C₁, ..., C_{N}) associé à ladite zone de stockage (46), le ou les secteurs de stockage (48) étant disjoints les uns des autres, chaque secteur de stockage (48) étant associé à une partition (P₁, ..., P₅) respective apte à être exécutée par un coeur (C₁, ..., C_{N}) correspondant, et
- traiter (110) successivement les descripteurs (44) stockés dans l'espace réservé de stockage (40), et secteur (48) par secteur (48) les descripteurs (44) stockés dans une zone de stockage (46) respective.

## Patentansprüche

1. Grafikprozessor (18), der dazu bestimmt ist, mit einem Mehrkern-Zentralprozessor (16) verbunden zu sein, der N verschiedene Kerne (C₁, ..., C_{N}) aufweist, wobei N eine ganze Zahl größer als oder gleich wie 2 ist, der Grafikprozessor (18) umfassend einen Speicher (26),
**dadurch gekennzeichnet, dass** der Speicher (26) einen reservierten Raum (40) zum Speichern von N Einheiten (42) von Deskriptor(en) (44) umfasst, wobei jede Einheit (42) von Deskriptor(en) (44) mit einem jeweiligen Kern (C₁, ..., C_{N}) des Mehrkern-Zentralprozessors (16) assoziiert ist, wobei jeder Deskriptor (44) einen Satz von Ressource(n) des Grafikprozessors (18) zur Anzeige von Daten durch eine Softwareanwendung identifiziert, die dazu bestimmt ist, über den jeweiligen Kern (C₁, ..., C_{N}) ausgeführt zu werden,
der reservierte Speicherraum (40) umfassend N verschiedene Speicherbereiche (46), wobei jeder Bereich (46) geeignet ist, um eine jeweilige Einheit (42) von Deskriptoren) (44) zu speichern, wobei die N Speicherbereiche (46) voneinander getrennt sind,
jeder Speicherbereich (46) umfassend einen oder mehrere verschiedene Speichersektoren (48), wobei jeder Sektor (48) geeignet ist, um eine jeweilige Teileinheit (50) von Deskriptor(en) (44) für eine jeweilige Softwareanwendung zu speichern, die geeignet ist, um von dem Kern (C₁, ..., C_{N}) ausgeführt zu werden, der mit dem Speicherbereich (46) assoziiert ist, wobei der oder die Speichersektoren (48) voneinander getrennt sind, wobei jeder Speichersektor (48) mit einer jeweiligen Partition (P₁, ..., P₅) assoziiert ist, die geeignet ist, um von einem entsprechenden Kern (C₁, ..., C_{N}) ausgeführt zu werden, und
dass der Grafikprozessor (18) ferner einen Sequenzer (28) umfasst, der konfiguriert ist, um die in dem reservierten Speicherraum (40) gespeicherten Deskriptoren (44) nacheinander zu verarbeiten, wobei der Sequenzer (28) konfiguriert ist, um die in einem jeweiligen Speicherbereich (46) gespeicherten Deskriptoren (44) Sektor (48) für Sektor (48) zu verarbeiten.

2. Grafikprozessor (18) nach Anspruch 1, wobei mit jedem Speichersektor (48) eine maximale Zeitverzögerung assoziiert ist und der Sequenzer (28) konfiguriert ist, um, wenn die maximale Zeitverzögerung erreicht ist, die Verarbeitung des oder der Deskriptoren (44) für einen aktuellen Sektor (48) zu unterbrechen und zu der Verarbeitung des oder der Deskriptoren (44) für einen nächsten Sektor (48) überzugehen;
wobei der Sequenzer (28) vorzugsweise und im Falle einer Unterbrechung einer jeweiligen Verarbeitung von Deskriptor(en) (44) konfiguriert ist, um an einem Speicherort einen Ausführungszustand von jedem Deskriptor (44), dessen Verarbeitung unterbrochen ist, für eine nachfolgende Wiederaufnahme der unterbrochenen Verarbeitung zu speichern.

3. Grafikprozessor (18) nach Anspruch 1 oder 2, wobei mit jedem Sektor (48) eine Prioritätsstufe assoziiert ist, und wenn ein jeweiliger Speicherbereich mehrere verschiedene Speichersektoren (48) umfasst, der Sequenzer (28) ferner konfiguriert ist, um die Speichersektoren (48) in einer monotonen Reihenfolge ihrer Prioritätsstufen zu verarbeiten.

4. Grafikprozessor (18) nach einem der vorherigen Ansprüche, wobei jeder Deskriptor (44) eine oder mehrere Informationen enthält, die ausgewählt sind aus der Gruppe, bestehend aus: einem Identifikator eines Grafikkontexts; einem Identifikator einer Grafikoberfläche; einer maximalen Ausführungszeit; und einem Identifikator eines Befehls- und Ausführungsstapels.

5. Plattform (12), umfassend einen Grafikprozessor (18) und einen Mehrkern-Zentralprozessor (16), der N verschiedene Kerne (C₁, ..., C_{N}) aufweist, wobei N eine ganze Zahl größer als oder gleich wie 2 ist, wobei der Grafikprozessor (18) mit dem Zentralprozessor (16) verbunden ist,
**dadurch gekennzeichnet, dass** der Grafikprozessor (18) nach einem der vorherigen Ansprüche ist.

6. Verfahren zur Verwaltung von Ressource(n) eines Grafikprozessors (18), wobei das Verfahren durch den Grafikprozessor (18) implementiert wird, der Grafikprozessor (18) umfassend einen Speicher (26) und ist mit einem Mehrkern-Zentralprozessor (16) verbunden, der N verschiedene Kerne (C₁, ..., C_{N}) aufweist, wobei N eine ganze Zahl größer als oder gleich wie 2 ist,
das Verfahren umfassend die Schritte, die aus Folgendem bestehen:
- Zuweisen (100), in dem Speicher (26), eines reservierten Raums (40) zur Speicherung von N Einheiten (42) von Deskriptor(en) (44), wobei jede Einheit (42) von Deskriptor(en) (44) mit einem jeweiligen Kern (C₁, ..., C_{N}) des Mehrkern-Zentralprozessors (16) assoziiert ist, wobei jeder Deskriptor (44) einen Satz von Ressource(n) des Grafikprozessors (18) zur Anzeige von Daten durch eine Softwareanwendung identifiziert, die dazu bestimmt ist, über den jeweiligen Kern (C₁, ..., C_{N}) ausgeführt zu werden,
der reservierte Speicherraum (40) umfassend N verschiedene Speicherbereiche (46), wobei jeder Bereich (46) geeignet ist, um eine jeweilige Einheit (42) von Deskriptor(en) (44) zu speichern, wobei die N Speicherbereiche (46) voneinander getrennt sind,
jeder Speicherbereich (46) umfassend einen oder mehrere verschiedene Speichersektoren (48), wobei jeder Sektor (48) geeignet ist, um eine jeweilige Teileinheit (50) von Deskriptor(en) (44) für eine jeweilige Softwareanwendung zu speichern, die geeignet ist, um von dem Kern (C₁, ..., C_{N}) ausgeführt zu werden, der mit dem Speicherbereich (46) assoziiert ist, wobei der oder die Speichersektoren (48) voneinander getrennt sind, wobei jeder Speichersektor (48) mit einer jeweiligen Partition (P₁, ..., P₅) assoziiert ist, die geeignet ist, um von einem entsprechenden Kern (C₁, ..., C_{N}) ausgeführt zu werden, und
- nacheinander Verarbeiten (110) der in dem reservierten Speicherraum (40) gespeicherten Deskriptoren (44), und Sektor (48) für Sektor (48) der Deskriptoren (44), die in einem jeweiligen Speicherbereich (46) gespeichert sind.

## Claims

1. A graphics processor unit (18) designed to be connected to a multi-core central processor unit (16) having N distinct cores (C₁,..., C_{N}), N being an integer greater than or equal to 2, the graphics processor unit (18) comprising a memory storage unit (26),
**characterised in that** the memory storage unit (26) comprises a reserved space (40) for storing N sets (42) of descriptor(s) (44), each set (42) of descriptor(s) (44) being associated with a respective core (C₁,..., C_{N}) of the multi-core central processor unit (16), each descriptor (44) identifying a batch of resource(s) of the graphics processor unit (18) for the display of data by a software application designed to be executed via said respective core (C₁,..., C_{N}),
the reserved storage space (40) comprising N distinct storage zones (46), each zone (46) being capable of storing a respective set (42) of descriptor(s) (44), the N storage zones (46) being disjoint to one another,
each storage zone (46) comprising one or more distinct storage sectors (48), each sector (48) being capable of storing a respective subset (50) of descriptor(s) (44) for a respective software application that is able to be executed by the core (C₁,..., C_{N}) associated with said storage zone (46), the one or more storage sectors (48) being disjoint to one another, each storage sector (48) being associated to a respective partition (P₁,..., P₅) adapted to be executed by a corresponding core (C₁,..., C_{N}), and
**in that** the graphics processor unit (18) further comprises a sequencer (28) configured so as to successively process the descriptors (44) stored in the reserved storage space (40), the sequencer (28) being configured so as to process sector (48) by sector (48) the descriptors (44) stored in a respective storage zone (46).

2. A graphics processor unit (18) according to claim 1, wherein a maximum time interval is associated with each storage sector (48), and the sequencer (28) is configured so as to, when the maximum time interval is reached, interrupt the processing of the one or more descriptor(s) (44) for a current sector (48) and to proceed to the processing of the one or more descriptor(s) (44) for a subsequent sector (48);
the sequencer (28) being, preferably and in the event of interruption of the respective processing of descriptor(s) (44), configured so as to save, in a storage location, a state of execution of each descriptor (44) whose processing is interrupted, with a view to subsequent resumption of the interrupted processing.

3. A graphics processor unit (18) according to claim 1 or 2, wherein a priority level is associated with each sector (48), and when a respective storage zone includes multiple distinct storage zones (48), the sequencer (28) is moreover configured so as to process said storage sectors (48) in a monotonic order of priority levels thereof.

4. A graphics processor unit (18) according to any one of the preceding claims, wherein each descriptor (44) comprises one or more information items selected from the group consisting of: an identifier of a graphics context; an identifier of a graphic surface; maximum execution time; and an identifier of a command and execution stack.

5. A platform (12) comprising a graphics processor unit (18) and a multi-core central processor unit (16) having N distinct cores (C₁,..., C_{N}), N being an integer greater than or equal to 2, the graphics processor unit (18) being connected to the central processor unit (16),
**characterised in that** the graphics processor unit (18) is according to any one of the preceding claims.

6. A resource management method for managing the resources of a graphics processor unit (18), the method being implemented by the graphics processor unit (18), the graphics processor unit (18) comprising a memory storage unit (26) and being connected to a multi-core central processor unit (16) having N distinct cores (C₁,..., C_{N}), N being an integer greater than or equal to 2;
the method comprising of the following steps:
- allocating (100), in the memory storage unit (26), a reserved space (40) for storing N sets (42) of descriptor(s) (44), each set (42) of descriptor(s) (44) being associated with a respective core (C₁,..., C_{N}) of the multi-core central processor unit (16), each descriptor (44) identifying a batch of resource(s) of the graphics processor unit (18) for the display of data by a software application designed to be executed via said respective core (C₁,..., C_{N}),
the reserved storage space (40) comprising N distinct storage zones (46), each zone (46) being capable of storing a respective set (42) of descriptor(s) (44), the N storage zones (46) being disjoint to one another,
each storage zone (46) comprising one or more distinct storage sectors (48), each sector (48) being capable of storing a respective subset (50) of descriptor(s) (44) for a respective software application that is able to be executed by the core (C₁,..., C_{N}) associated with said storage zone (46), the one or more storage sectors (48) being disjoint to one another, each storage sector (48) being associated to a respective partition (P₁,..., P₅) adapted to be executed by a corresponding core (C₁,..., C_{N}), and
- successively processing (110) the descriptors (44) stored in the reserved storage space (40), and sector (48) by sector (48) the descriptors (44) stored in a respective storage zone (46).
